# EUROPÄISCHE PATENTSCHRIFT

(11) **EP 2 397 715 B1**
(45) Veröffentlichungstag und Bekanntmachung des Hinweises auf die Patenterteilung: **29.05.2013**
(21) Anmeldenummer: 11168744.8
(22) Anmeldetag: 06.06.2011
(51) Int. Cl.: F16D 3/227

(54) **Gelenkige Wellenverbindung**
Shaft coupling with a jointed connection
Liaison d'arbre articulée

(30) Priorität: 17.06.2010 AT 10002010
(43) Veröffentlichungstag der Anmeldung: 21.12.2011
(73) Patentinhaber: Tectos GmbH, 8010 Graz (AT)
(72) Erfinder: Höfler, Dieter, 8010 Graz (AT)
(74) Vertreter: Babeluk, Michael

(56) Entgegenhaltungen:
- DE-A1- 3 820 449
- DE-A1- 19 842 408
- US-A- 4 068 499
- US-A- 4 318 282
- US-A1- 2008 234 057

## Beschreibung

Die Erfindung betrifft eine gelenkige Wellenverbindung, mit zumindest einem Gleichlaufgelenk zum Ausgleich von Achsschiefstellungen zweier Elemente eines Antriebsstranges, wobei das Gleichlaufgelenk einen mit einem ersten Anschlussteil für ein Element des Antriebsstranges verbundenen Außenring und einen mit einem zweiten Anschlussteil für ein anderes Element des Antriebsstranges verbundenen Innenring aufweist, wobei zwischen dem Außenring und dem Innenring ein Käfig mit Drehmoment zwischen dem Außenring und dem Innenring übertragenden Wälzkörpern angeordnet ist und Außenring und Innenring relativ zueinander zwischen einer ersten und zumindest einer zweiten Stellung axial verschiebbar ausgebildet sind und die axiale Erstreckung des Gleichlaufgelenkes in der ersten Stellung größer ist als in der zweiten Stellung, und wobei zwischen erstem Anschlussteil und zweitem Anschlussteil zumindest eine die beiden Anschlussteile gegeneinander in Richtung einer größeren axialen Erstreckung vorspannende Druckfeder angeordnet ist.

Die DE 198 42 408 A1 beschreibt einen Fahrzeugantriebsstrang mit einer Antriebswelle, an deren Enden jeweils ein Tauch-Gleichlaufgelenk angeordnet ist, dessen Innenring relativ zum Außenring axial verschiebbar ist, um translatorische Bewegungen zu ermöglichen. Um axiales Spiel auszugleichen sind Innenring und Außenring zumindest eines Gleichlaufgelenks durch eine Feder gegeneinander verspannt und gedämpft.

Die WO 93/02297 A1 offenbart eine Wellenverbindung mit zwei Gleichlaufgelenken, welche an jedem Ende einer Antriebswelle angeordnet sind. Die Gleichlaufgelenke weisen zum Ausgleich von axialem Spiel bzw. Längenänderungen relativ zueinander verschiebbare Innen- und Außenringe auf, wobei Innenring und Außenring jeweils durch eine Feder vorgespannt sind.

Aus der EP 1 224 400 B1 ist eine Kupplung zur Verbindung einer Antriebswelle mit einem angetriebenen Organ bekannt, wobei die Kupplung eine Formschlusseinrichtung zur Übertragung von Drehmoment und ein Ausgleichsgelenk zum Ausgleichen von Wellenschiefstellungen aufweist.

Die DE 196 53 573 A1 beschreibt eine Kugelgelenkverbindung mit konstanter Geschwindigkeit, welche ein winkliges Verstellen zwischen An- und Abtriebswelle erlaubt.

Auch die JP 10-311343 A beschreibt eine Kugelgelenkverbindung, wobei zum axialen Spielausgleich ein Innenring und ein Außenring der Kugelgelenkverbindung durch eine Feder gegeneinander verspannt sind.

Weitere gelenkige Wellenverbindungen mit Gleichlaufgelenken sind aus den Veröffentlichungen US 2008/0234057 A1, DE 29 27 648 A1 und AT 218.314 B bekannt.

Schnelldockeinrichtungen werden vorallem für die Kupplung von Wellen und Antriebsmotoren, beispielsweise bei Motorprüfständen, eingesetzt. Dabei ist es wesentlich, dass Desachsierungen ausgeglichen werden und dass eine rasche und sichere drehfeste Verbindung zwischen treibendem und angetriebenem Teil bewirkt wird.

Bekannte Wellenverbindungen mit Ausgleichsgelenken haben den Nachteil, dass im entkuppelten Zustand keine koaxiale Mittellage des Ausgleichsgelenkes definiert ist, wodurch ein automatischer Ankoppelvorgang nicht ohne weiteres möglich ist.

Aufgabe der Erfindung ist es, diesen Nachteil zu vermeiden und auf möglichst einfache Weise einen raschen Ankoppelvorgang zu ermöglichen, wobei axiales Spiel und Achsschiefstellungen ausgeglichen werden sollen.

Erfindungsgemäß wird dies dadurch erreicht, dass die eine Endlage bildende erste Stellung durch eine mit dem Außenring fest verbundene ringförmige Arretierplatte für den Käfig und/oder für den Innenring definiert ist, wobei die Arretierplatte normal zur Drehachse des Außenringes im Bereich einer dem zweiten Anschlussteil zugewandten Stirnseite des Außenringes angeordnet ist, und wobei in der ersten Stellung der Innenring und/oder der Käfig durch die Druckfeder gegen die Arretierplatte gedrückt und in der zweiten Stellung der Innenring und/ oder der Käfig von der Arretierplatte freigestellt ist.

Durch die Vorspannung zu Folge der Druckfeder wird in der Betriebsposition eine axiale Kraft eingeleitet, die axiale Spiele in der Wellenverbindung zuverlässig unterdrückt.

Erfindungsgemäß bildet die erste Stellung eine Achsschiefstellungen des ersten und zweiten Anschlussteiles unterbindende Sperrposition für das Gleichlaufgelenk und die zweite Stellung eine Achsschiefstellungen ermöglichende Freigabeposition.

Die Arretierplatte stellt das Gleichlaufgelenk bei Erreichen seiner maximalen axialen Erstreckung in die ausgerichtete Ruhelage. Durch die Vorspannung kann unter Kraft zwar das Gleichlaufgelenk winkelig ausgelenkt werden, kehrt aber immer in seine Ruhelage zurück. Dies ermöglicht automatische Dockvorgänge.

Eine besonders hohe Vorspannkraft kann beispielsweise durch zwei konzentrisch angeordnete Federn erzielt werden. Ein mit hoher Vorspannkraft vorgespanntes Gleichlaufgelenk, welches durch die Arretierplatte in seiner Endposition fixiert ist, lässt im Wesentlichen keine Winkelbewegungen zu. Wird durch eine axiale Kraft die Federvorspannung überwunden, ist das Gelenk freigängig.

Eine effektive Sperrung des Gelenkes kann erreicht werden, wenn der Innendurchmesser der Arretierplatte größer als der innere Durchmesser des Innenringes und kleiner als der äußere Durchmesser des Käfigs, vorzugsweise kleiner als der äußere Durchmesser des Innenringes, ausgebildet ist.

Zum dauerhaften und festen Anschluss eines Elementes des Antriebsstranges ist es vorteilhaft, wenn der erste Anschlussteil einen mit dem Außenring verbundenen Wellenflansch aufweist.

In einer sehr vorteilhaften Ausführungsvariante ist vorgesehen, dass zumindest ein erster Anschlussteil einen mit dem Außenring verbundenen ersten Formschlussteil aufweist, welcher über ein zweites Formschlussteil mit einem Element des Antriebstranges drehfest verbindbar ist, wobei vorzugsweise die beiden Formschlussteile eine Zahnkupplung ausbilden. Dadurch ist es möglich rasch Elemente im Antriebsstrang miteinander zu verbinden oder einen Antriebsstrang zum Beispiel an eine Antriebsmaschine temporär anzudocken.

Der zweite Anschlussteil kann einen Wellenzapfen aufweisen, welcher fest mit dem Innenring des Gleichlaufgelenks verbunden ist.

In weiterer Ausführung der Erfindung kann vorgesehen sein, dass der zweite Formschlussteil mit einer Adapterscheibe drehverbunden ist, wobei vorzugsweise die Schwungmasse der Adapterscheibe veränderbar ist. Mit Hilfe der Adapterscheibe kann bei Einsatz am Motor bzw. Motorprüfstand die Schwungmasse so eingestellt werden, dass eine zuvor festgelegte Dreheigenfrequenz erreicht wird. Dadurch kann der Wellenstrang für unterschiedliche Anwendungen abgestimmt werden.

Ein einfacher Kupplungsvorgang kann erreicht werden, wenn eine Außenverzahnung des ersten Formschlussteils und/oder eine Innenverzahnung des zweiten Formschlussteils im Bereich der im ausgekuppelten Zustand einander zugewandten Stirnseiten angespitzt ausgeführt ist. Eine schnelle Zentrierung wird erreicht, wenn die Innenverzahnung im Bereich der angespitzten Zahnenden in einen Zentrierring übergeht, dessen Innendurchmesser mindestens dem Durchmesser des Zahnfußes der Innenverzahnung entspricht, wobei es besonders vorteilhaft ist, wenn die Außenverzahnung im Bereich eines den angespitzten Zahnenden abgewandten Endes in einen Zentrierbund übergeht, dessen Durchmesser dem Innendurchmesser des Zentrierringes entspricht.

In einer besonders bevorzugten Ausführungsvariante der Erfindung ist vorgesehen, dass die Wellenverbindung zwei Gleichlaufgelenke aufweist, wobei die beiden Gleichlaufgelenke an unterschiedlichen Enden einer Antriebswelle angeordnet sind, und wobei die zweiten Anschlussteile durch die Antriebswelle gebildet oder mit dieser drehfest verbunden sind. Dabei kann der erste Anschlussteil des ersten Gleichlaufgelenkes als erster Formschlussteil und der erste Anschlussteil des zweiten Gleichlaufgelenkes als Wellenflansch ausgebildet sein. Auf diese Weise kann eine frei stehende gelenkige Welle realisiert werden, bei der auf Stützeinrichtungen zur Verhinderung des Einknickens des freien Wellenendes vor oder nach dem Dockvorgang verzichtet werden kann.

Die Erfindung wird im Folgenden anhand der Figuren näher erläutert. Es zeigen:
Fig. 1 die erfindungsgemäße Wellenverbindung in einer Explosionsdarstellung in einer ersten Ausführungsvariante;
Fig. 2 ein Detail der Wellenverbindung aus Fig. 1;
Fig. 3 die Wellenverbindung in einer ersten Stellung in einem Meridianschnitt;
Fig. 4 das Detail IV aus Fig. 3;
Fig. 5 die Wellenverbindung in einer zweiten Stellung in einem Meridianschnitt;
Fig. 6 das Detail VI aus Fig. 5;
Fig. 7 die erfindungsgemäße Wellenverbindung in einem Längsschnitt in einer zweiten Ausführungsvariante; und
Fig. 8 das Detail VIII aus Fig. 7.

Die Wellenverbindung dient zur Drehverbindung von treibenden und angetriebenen Elementen in einem Antriebsstrang.

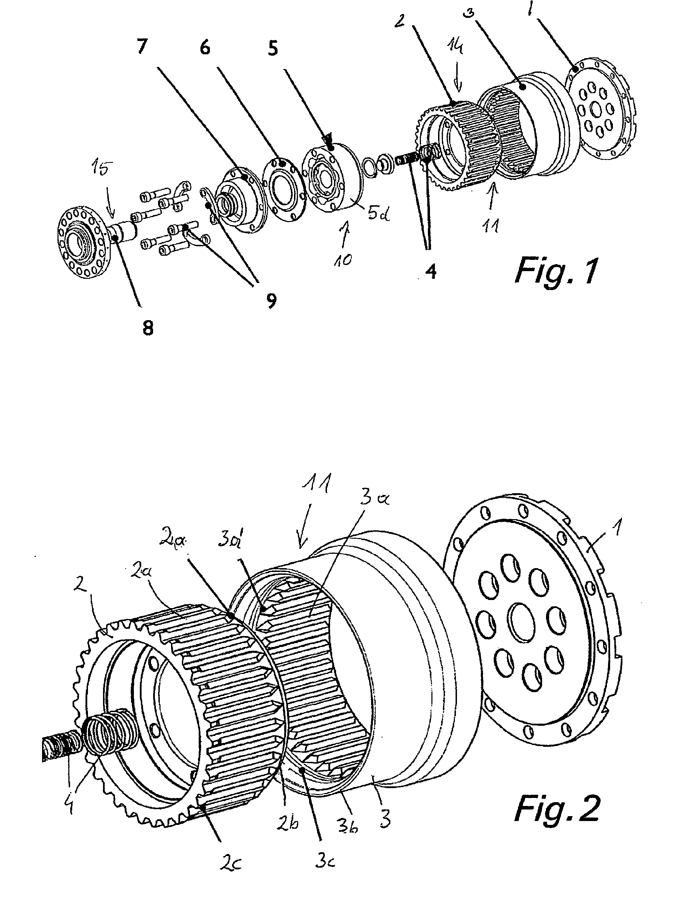

Die in den Fig. 1 bis Fig. 6 dargestellte Wellenverbindung 10 weist einen als Formschlussverbindung ausgebildeten Dockmechanismus auf, welcher im Ausführungsbeispiel durch eine Zahnkupplung 11 gebildet ist. Die Zahnkupplung 11 besteht aus einem außenverzahnten ersten Formschlussteil 2, welcher das Gleichlaufgelenk 5 aufnimmt, sowie einem innenverzahnten zweiten Formschlussteil 3, der entweder direkt oder über eine Adapterplatte 1 mit einer nicht weiter dargestellten Antriebsmaschine verschraubt ist. Im Einsatz an der Antriebsmaschine bzw. Motorprüfstand kann mit Hilfe der Adapterscheibe 1 des innenverzahnten zweiten Teiles 3 die Schwungmasse so eingestellt werden, dass eine zuvor festgelegt erste Dreheigenfrequenz erreicht wird. Dadurch kann der Wellenstrang für unterschiedliche Anwendungen abgestimmt werden.

Die Innenverzahnung 3a des zweiten Formschlussteils 3, sowie die Außenverzahnung 2a des ersten Formschlussteils 2 sind im Bereich der im ausgekuppelten Zustand einander zugewandten Stirnseiten 2b, 3b angespitzt ausgeführt, wodurch ein flankenzentrierter einfacher Andockvorgang möglich wird. Die Innenverzahnung 3a geht am den angespitzten Zahnenden 3a' abgewandten offenen Ende des innenverzahnten ersten Formschlussteils 3 in einen Zentrierdurchmesser 3c über, der größer oder gleich dem Zahnfußdurchmesser der Innenverzahnung 3a ist. Dadurch kann ein leichtes Einfädeln der beiden Formschlussteile 2, 3 erreicht werden. Die Außenverzahnung 2a des ersten Formschlussteils 2 ist zur Ermöglichung eines einfachen Kuppelvorganges ebenfalls angespitzt. An dem den angespitzten Zahnenden 2a' gegenüberliegenden Ende erweitert sich der Zahnkopf der Außenverzahnung 2a zu einer Zentrierung 2c.

Das Gleichlaufgelenk 5 weist einen mit einem ersten Anschlussteil 14 für ein Element des Antriebsstranges verbundenen Außenring 5d und einen mit einem zweiten Anschlussteil 15 für ein anderes Element des Antriebsstranges verbundenen Innenring 5a auf, wobei zwischen dem Außenring 5d und dem Innenring 5a ein Käfig 5b mit Drehmoment zwischen dem Außenring 5d und dem Innenring 5a übertragenden Wälzkörpern 5c angeordnet ist. Der Außenring 5d und der Innenring 5a sind relativ zueinander zwischen einer ersten und zumindest einer zweiten Stellung A, B axial verschiebbar ausgebildet. Die axiale Erstreckung des Gleichlaufgelenkes 5 in der ersten Stellung A ist größer als in der zweiten Stellung B.

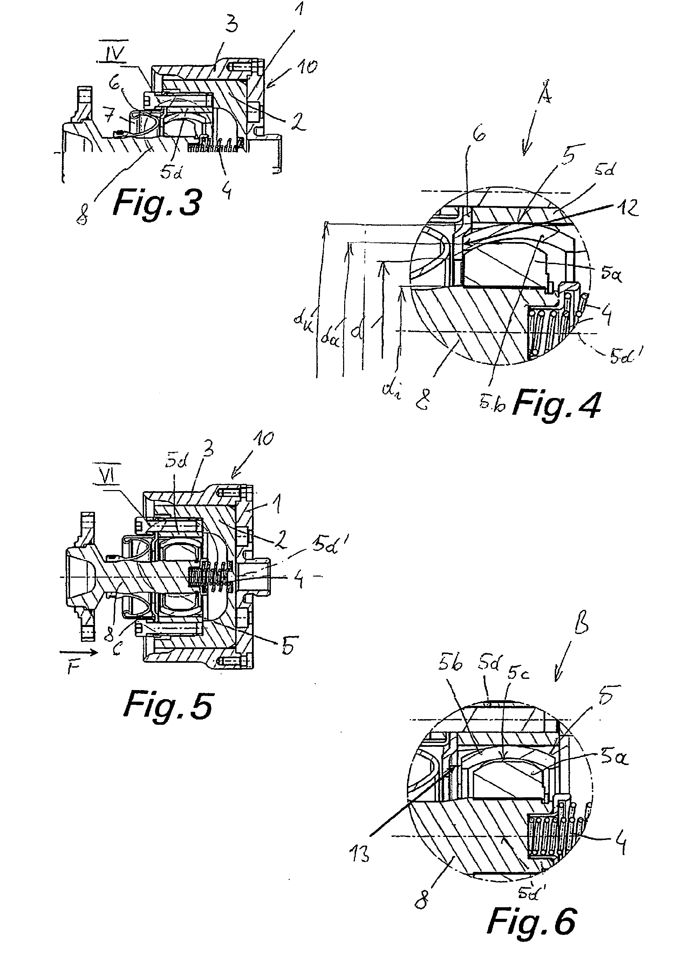

Das Gleichlaufgelenk 5 wird durch Druckfedern 4, die sich am außenverzahnten ersten Formschlussteil 2 auf der einen und am Innenring 5a des Gleichlaufgelenkes 5 bzw. dem Wellenzapfen 8 an der anderen Seite abstützen, vorgespannt. Im in den Fig. 3 und Fig. 4 gezeigten ungedockten Zustand ist das Gleichlaufgelenk 5 durch die Druckfedern 4 voll ausgezogen und befindet sich in der Sperrposition mit definierter Mittellage. Im gedockten Zustand wird das Gleichlaufgelenk 5 in die in den Fig. 5 und Fig. 6 dargestellten Neutralposition, also in die Betriebsposition, geschoben, wobei die Gelenksperre aufgehoben ist. Die Kraft der Druckfedern 4 presst den außenverzahnten ersten Formschlussteil 2 aber weiterhin fest gegen den innenverzahnten zweiten Formschlussteil 3. Dadurch werden Spiele ausgeglichen.

Um ein einfaches Andocken unter Unterbindung eines Abknickens des Gleichlaufgelenkes 5 zu ermöglichen, ist am hinteren Ende des Gleichlaufgelenkes 5 eine ringförmige Arretierplatte 6 angebracht. Diese wird durch den Deckel 7 des Gleichlaufgelenkes 5 abgedeckt, welcher mit Schrauben 9 am Außenring 5d des Gleichlaufgelenks 5 befestigt ist. Der Innendurchmesser d der Arretierplatte 6 ist größer als der innere Durchmesser dᵢ des Innenringes 5a und kleiner als der äußere Durchmesser dₖ des Käfigs 5b, insbesondere kleiner als der äußere Durchmesser dₐ des Innenringes 5a, ausgebildet.

In der Sperrposition, also dem ungedockten Zustand, werden der außenverzahnte erste Formschlussteil 2, welcher den ersten Anschlussteil 14 für das Gleichlaufgelenk bildet, und der das Gleichlaufgelenk 5 aufnehmende und den zweiten Anschlussteil 15 bildende Wellenzapfen 8 voneinander weggedrückt, wodurch der Drehmoment übertragende Wälzkörper 5c aufnehmende Käfig 5b des Gleichlaufgelenkes 5 gegen diese Arretierplatte 6 gedrückt wird und das Gleichlaufgelenk 5 an einer Winkelbewegung gehindert wird. Das Gleichlaufgelenk 5 ist somit gesperrt. Mit Bezugszeichen 12 ist in Fig. 4 der Anschlag des Käfigs 5b an der Arretierplatte 6 verdeutlicht. Wird nun während des Ankoppelvorganges das Gleichlaufgelenk 5 gegen die Kraft der Druckfeder 4 gedrückt, so hebt der Käfig 5b von der Arretierplatte 6 ab, das Gleichlaufgelenk 5 ist nun frei winkelbeweglich. Die Freistellung des Gleichlaufgelenkes 5 gegenüber der Arretierplatte 6 ist in Fig. 6 mit Bezugszeichen 13 angedeutet.

Durch die Vorspannung zu Folge der Druckfedern 4 wird im Gleichlaufgelenk 5 eine axiale Kraft eingeleitet, die axiale Spiele in der Wellenverbindung 10 und dem an die Wellenverbindung anschließenden System unterdrückt. Die Arretierungsplatte 6 stellt das Gleichlaufgelenk 5 bei Erreichen seines maximalen Auszuges in die ausgerichtete Ruhelage. Unter Krafteinwirkung kann zwar das Gelenk winkelig ausgelenkt werden, kehrt aber immer in seine Ruhelage zurück. Andererseits kann durch geeignete Dimensionierung der Druckfedern 4 das federvorgespannte Gleichlaufgelenk 5 durch die Arretierungsplatte 6 in seiner Sperrposition praktisch fixiert werden, so dass keine unbeabsichtigten Winkelbewegungen zugelassen werden. Durch eine axiale Kraft F kann die Federvorspannung der Druckfedern 4 überwunden und das Gleichlaufgelenk 5 freigängig gemacht werden.

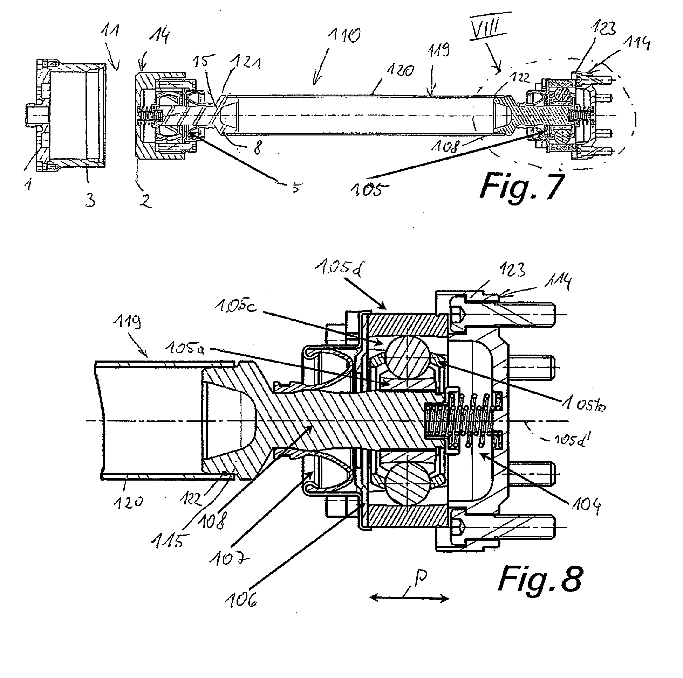

Fig. 7 und Fig. 8 zeigt eine als gelenkige Welle 119 ausgebildete Wellenverbindung 110 für einen Antriebsstrang, welche ein erstes und ein zweites Gleichlaufgelenk 5, 105 aufweist. Das erste Gleichlaufgelenk 5 wurde bereits an Hand der Figuren 1 bis 6 eingehend beschrieben. Das zweite Gleichlaufgelenk 105 weist wie das erste Gleichlaufgelenk 5 einen Innenring 105a und einen Außenring 105d, sowie einen Käfig 105b für Wälzkörper 105c auf. Der Innenring 105a ist mit einem durch einen Wellenzapfen 108 gebildeten zweiten Anschlussteil 115 verbunden.

Das zweite Gleichlaufgelenk 105 unterscheidet sich vom ersten Gleichlaufgelenk 5 nur dadurch, dass der Außenring 105d mit einem einen ersten Anschlussteil 114 bildenden Wellenflansch 123 zum Anschluss eines nicht weiter dargestellten Elementes des Antriebsstranges fest verbunden ist.

Die beiden Gleichlaufgelenke 5 und 105 sind an unterschiedlichen Enden 121, 122 einer Antriebswelle 120 angeordnet. Jeder Innenring 5a, 105a ist jeweils mit einem einen zweiten Anschlussteil 15, 115 bildenden Wellenzapfen 8, 108, und diese sind wiederum mit der Antriebswelle 120 fest verbunden. Dabei kann es sich beispielsweise um Pressverbindungen handeln.

Analog zum ersten Gleichlaufgelenk 5, ist auch beim zweiten Gleichlaufgelenk 105 der Innenring 105a relativ zum Außenring 105d axial verschiebbar, wie durch Pfeil P angedeutet ist, wobei der Innenring 105a über Druckfedern 104 gegen eine ringförmige Arretierplatte 106 gedrückt wird, welche fest mit dem Außenring 105d verbunden ist. In dieser ersten Stellung A ist das Gleichlaufgelenk 105 gesperrt, Achsschiefstellungen werden unterbunden bzw. sind nur unter erheblicher Krafteinwirkung möglich. Die Druckfedern 104 stützen sich dabei einerseits am Wellenzapfen 108 und andererseits am fest mit dem Außenring 105d verbundenen Wellenflansch 123 ab. Die Arretierplatte 106 ist durch einen eine Manschette aufweisenden Deckel 107 abgedeckt.

Die Wellenverbindung 110 weist an einem Ende 121 eine durch die Zahnkupplung 11 gebildete Schnelldockvorrichtung oder eine Verzahnung zur Momentenübertragung auf, wobei im Betrieb die beiden Formschlussteile 2, 3 drehbar verbunden sind. Im Bereich des anderen Endes 122 ist die Wellenverbindung 110 über den Wellenflansch 123 fest mit einem gelagerten Element des Antriebsstranges, zum Beispiel einem Zwischenlager oder einer elektrischen Maschine, verbunden. Im ausgedockten Zustand wird die Wellenverbindung 110 durch die Druckfedern 4, 104 auseinandergedrückt. Dabei werden die Käfige 5b, 105b gegen die Arretierungsplatten 6, 106 gepresst. Die durch Kugeln gebildeten Wälzkörper 5c, 105c werden somit an der Bewegung gehindert, die Gleichlaufgelenke 5, 105 können nicht abgebogen werden. Die Welle 119 steht frei axial ausgerichtet mit gesperrten Gelenken.

Die Anordnung ist dabei so ausgerichtet, dass im Betrieb die Gleichlaufgelenke 5, 105 in ihrer Neutralposition, also etwa mittig im Lager, stehen. Wird nun zum Beispiel ein Motor gedockt, so wird der zweite Formschlussteil 3 über den ersten Formschlussteil 2 geschoben und die Wellenverbindung 110 unter axialer Krafteinwirkung zusammengedrückt, also um den durch den axialen Abstand der Innenringe 5a, 105a zu den Arretierplatten 6, 106 in der zweiten Stellung B definierten Weg verkürzt. Durch das Zusammenschieben hebt der Käfig 5b, 105b von der Arretierplatte 6, 106 ab und das Gleichlaufgelenk 5, 105 wird freigängig.

Auf diese Weise kann eine frei stehende Ausführung einer gelenkigen Welle 119 realisiert werden. Stützeinrichtungen, die ein Einknicken der Welle verhindern sollen, können somit entfallen.

## Patentansprüche

1. Gelenkige Wellenverbindung (10, 110), mit zumindest einem Gleichlaufgelenk (5, 105) zum Ausgleich von Achsschiefstellungen zweier Elemente eines Antriebsstranges, wobei das Gleichlaufgelenk (5, 105) einen mit einem ersten Anschlussteil (14, 114) für ein Element des Antriebsstranges verbundenen Außenring (5d, 105d) und einen mit einem zweiten Anschlussteil (15, 115) für ein anderes Element des Antriebsstranges verbundenen Innenring (5a, 105a) aufweist, wobei zwischen dem Außenring (5d, 105d) und dem Innenring (5a, 105a) ein Käfig (5b, 105b) mit Drehmoment zwischen dem Außenring (5d, 105d) und dem Innenring (5a, 105a) übertragenden Wälzkörpern (5c, 105c) angeordnet ist und Außenring (5d, 105d) und Innenring (5a, 105a) relativ zueinander zwischen einer ersten und zumindest einer zweiten Stellung (A, B) axial verschiebbar ausgebildet sind und die axiale Erstreckung des Gleichlaufgelenkes (5, 105) in der ersten Stellung (A) größer ist als in der zweiten Stellung (B), und wobei zwischen erstem Anschlussteil (14, 114) und zweitem Anschlussteil (15, 115) zumindest eine die beiden Anschlussteile (14, 114; 15, 115) gegeneinander in Richtung einer größeren axialen Erstreckung vorspannende Druckfeder (4, 104) angeordnet ist, **dadurch gekennzeichnet, dass** die eine Endlage bildende erste Stellung (A) durch eine mit dem Außenring (5d, 105d) fest verbundene ringförmige Arretierplatte (6, 106) für den Käfig (5b, 105b) und/oder für den Innenring (5a, 105a) definiert ist, wobei die Arretierplatte (6, 106) normal zur Drehachse (5d', 105d') des Außenringes (5d, 105d) im Bereich einer dem zweiten Anschlussteil (15, 115) zugewandten Stirnseite des Außenringes (5d, 105d) angeordnet ist, und wobei in der ersten Stellung (A) der Innenring (5a, 105a) und/oder der Käfig (5b, 105b) durch die Druckfeder (4, 104) gegen die Arretierplatte (6, 106) gedrückt und in der zweiten Stellung (B) der Innenring (5a, 105a) und/oder der Käfig (5b, 105b) von der Arretierplatte (6, 106) freigestellt ist, und dass die erste Stellung (A) eine Achsschiefstellungen des ersten und zweiten Anschlussteiles (14, 114; 15, 115) unterbindende Sperrposition für das Gleichlaufgelenk (5, 105) und die zweite Stellung (B) eine Achsschiefstellungen ermöglichende Freigabeposition bildet.

2. Wellenverbindung (10, 110) nach Anspruch 1, **dadurch gekennzeichnet, dass** der Innendurchmesser (d) der Arretierplatte (6, 106) größer als der innere Durchmesser (dᵢ) des Innenringes (5a, 105a) und kleiner als der äußere Durchmesser (dₖ) des Käfigs (5b, 105b), vorzugsweise kleiner als der äußere Durchmesser (dₐ) des Innenringes (5a, 105a), ausgebildet ist.

3. Wellenverbindung (110) nach Anspruch 1 oder 2, **dadurch gekennzeichnet, dass** zumindest ein erster Anschlussteil (114) einen mit dem Außenring (105d) verbundenen Wellenflansch (123) zum Anschluss eines Elementes des Antriebsstranges aufweist.

4. Wellenverbindung (10, 110) nach einem der Ansprüche 1 bis 3, **dadurch gekennzeichnet, dass** zumindest ein erster Anschlussteil (14) einen mit dem Außenring (5d) verbundenen ersten Formschlussteil (2) aufweist, welcher über einen zweiten Formschlussteil (3) mit einem Element des Antriebstranges drehfest verbindbar ist, wobei vorzugsweise die beiden Formschlussteile (2, 3) eine Zahnkupplung (11) ausbilden.

5. Wellenverbindung (10, 110) nach einem der Ansprüche 1 bis 4, **dadurch gekennzeichnet, dass** zumindest ein zweiter Anschlussteil (15, 115) einen mit dem Innenring (5a, 105a) des Gleichlaufgelenks (5, 105) fest verbundenen Wellenzapfen (8, 108) aufweist.

6. Wellenverbindung (110) nach einem der Ansprüche 1 bis 5, **dadurch gekennzeichnet, dass** die Wellenverbindung (110) ein erstes und ein zweites Gleichlaufgelenk (5, 105) aufweist, wobei die beiden Gleichlaufgelenke (5, 105) an unterschiedlichen Enden (121, 122) einer Antriebswelle (120) angeordnet sind, wobei die zweiten Anschlussteile (15, 115) durch die Antriebswelle (120) gebildet oder mit dieser drehfest verbunden sind.

7. Wellenverbindung (110) nach Anspruch 6, **dadurch gekennzeichnet, dass** der erste Anschlussteil (14) des ersten Gleichlaufgelenkes (5) als erster Formschlussteil (2) und der erste Anschlussteil (114) des zweiten Gleichlaufgelenkes (105) als Wellenflansch (123) ausgebildet ist.

8. Wellenverbindung (10, 110) nach einem der Ansprüche 4 bis 7, **dadurch gekennzeichnet, dass** zumindest ein erster Anschlussteil (14), vorzugsweise ein zweiter Formschlussteil (3) des ersten Anschlussteiles (14), mit einer Adapterscheibe (1) drehfest verbunden ist, wobei vorzugsweise die Schwungmasse der Adapterscheibe (1) veränderbar ist.

9. Wellenverbindung (10, 110) nach einem der Ansprüche 4 bis 8, **dadurch gekennzeichnet, dass** eine Außenverzahnung (2a) des ersten Formschlussteils (2) und/oder eine Innenverzahnung (3a) des zweiten Formschlussteils (3) an den im ausgekuppelten Zustand einander zugewandten Stirnseiten (2b, 3b) angespitzt ausgeführt ist.

10. Wellenverbindung (10, 110) nach Anspruch 9, **dadurch gekennzeichnet, dass** die Innenverzahnung (3a) im Bereich der angespitzten Zahnenden (3a') in einen Zentrierring (3c) übergeht, dessen Innendurchmesser mindestens dem Durchmesser des Zahnfußes der Innenverzahnung (3a) entspricht.

11. Wellenverbindung (10, 110) nach Anspruch 10, **dadurch gekennzeichnet, dass** die Außenverzahnung (2b) im Bereich eines den angespitzten Zahnenden (2a') abgewandten Endes in einen Zentrierbund (2c) übergeht, dessen Durchmesser dem Innendurchmesser des Zentrierringes (3c) entspricht.

## Claims

1. An articulated shaft connection (10, 110), comprising at least one constant velocity joint (5, 105) for compensating axial misalignments of two elements of a drive train, with the constant velocity joint (5, 105) comprising an outer ring (5d, 105d) connected with a first connecting part (14, 114) for an element of the drive train and an inner ring (5a, 105a) connected with a second connecting part (15, 115) for another element of the drive train, with a cage (5b, 105b) with rolling bodies (5c, 105c) that transmit torque between the outer ring (5d, 105d) and the inner ring (5a, 105a) being arranged between the outer ring (5d, 105d) and the inner ring (5a, 105a), and the outer ring (5d, 105d) and the inner ring (5a, 105a) are arranged to be axially displaceable relatively to one another between one first and at least one second position (A, B) and the axial extension of the constant velocity joint (5, 105) is larger in the first position (A) than in the second position (B), and with at least one pressure spring (4, 104) being arranged between the first connecting part (14, 114) and the second connecting part (15, 115), said pressure spring pretensioning the two connecting parts (14, 114; 15, 115) against one another in the direction of a larger axial extension, **characterised in that** the first position (A) which forms one end position is defined by an annular locking plate (6, 106) for the cage (5b, 105) and/or for the inner ring (5a, 105a), said locking plate being rigidly connected with the outer ring (5d, 105d), with the locking plate (6, 106) being arranged normally to the rotational axis (5d', 105d') of the outer ring (5d, 105d) in the region of a face side of the outer ring (5d, 105d) facing the second connecting part (15, 115), and with the inner ring (5a, 105a) and/or the cage (5b, 105b) being pressed in the first position (A) by the pressure spring (4, 104) against the locking plate (6, 106), and with the inner ring (5a, 105a) and/or the cage (5b, 105b) being released from the locking plate (6, 106) in the second position (B), and that the first position (A) forms a locking position for the constant velocity joint (5, 105) preventing axial misalignments of the first and second connecting part (14, 114; 15, 115) and the second position (B) forms a release position enabling axial misalignments.

2. A shaft connection (10, 110) according to claim 1, **characterised in that** the inside diameter (d) of the locking plate (6, 106) is larger than the inside diameter (dᵢ) of the inner ring (5a, 105a) and smaller than the outer diameter (dₖ) of the cage (5b, 105b), preferably smaller than the outer diameter (dₐ) of the inner ring (5a, 105a).

3. A shaft connection (110) according to claim 1 or 2, **characterised in that** at least one first connecting part (114) comprises a shaft collar (123) connected with the outer ring (105d) for connecting an element of the drive train.

4. A shaft connection (10, 110) according to one of the claims 1 to 3, **characterised in that** at least one first connecting part (114) comprises one first interlocking part (2) which is connected with the outer ring (5d) and which is connectible in a torsion-proof manner with an element of the drive train via a second interlocking part (3), with preferably the two interlocking parts (2, 3) forming a gear coupling (11).

5. A shaft connection (10, 110) according to one of the claims 1 to 4, **characterised in that** at least one second connecting part (15, 115) comprises a shaft journal (8, 108) which is rigidly connected with the inner ring (5a, 105a) of the constant velocity joint (5, 105).

6. A shaft connection (110) according to one of the claims 1 to 5, **characterised in that** the shaft connection (110) comprises a first and second constant velocity joint (5, 105), with the two constant velocity joints (5, 105) being arranged at different ends (121, 122) of a drive shaft (120), with the second connecting parts (15, 115) being formed by the drive shaft (120) or being connected with said shaft in a torsion-proof manner.

7. A shaft connection (110) according to claim 6, **characterised in that** the first connecting part (14) of the first constant velocity joint (5) is arranged as the first interlocking part (2) and the first connecting part (114) of the second constant velocity joint (105) as a shaft collar (123).

8. A shaft connection (10, 110) according to one of the claims 4 to 7, **characterised in that** at least one first connecting part (14), preferably a second interlocking part (3) of the first connecting part (14), is connected in a torsion-proof manner with an adapter disk (1), with preferably the flywheel mass of the adapter disk (1) being variable.

9. A shaft connection (10, 110) according to one of the claims 4 to 8, **characterised in that** an external gearing (2a) of the first interlocking part (2) and/or an internal gearing (3a) of the second interlocking part (3) is provided with a pointed configuration on the face sides (2b, 3b) which face each other in the disengaged state.

10. A shaft connection (10, 110) according to claim 9, **characterised in that** the internal gearing (3a) converges into a centring ring (3c) in the region of the pointed tooth ends (3a'), the inside diameter of said centring ring corresponding at least to the diameter of the tooth base of the internal gearing (3a).

11. A shaft connection (10, 110) according to claim 10, **characterised in that** the external gearing (2b) converges into a centring collar (2c) in the region of an end facing away from the pointed tooth ends (2a'), the diameter of said centring collar corresponding to the inside diameter of the centring ring (3c).

## Revendications

1. Liaison d'arbre articulée (10, 110) comportant au moins un joint homocinétique (5, 105) pour compenser des positions désaxées de deux éléments d'une ligne d'entrainement, ce joint homocinétique (5, 105) comportant une bague externe (5d, 105d) reliée à une première partie de liaison (14, 114) pour un élément de la ligne d'entrainement et une bague interne (5a, 105a) reliée à une seconde partie de liaison (15, 115) pour un autre élément de la ligne d'entrainement, entre la bague externe (5d, 105d) et la bague interne (5a, 105a) étant montée une cage munie de corps de roulement (5c, 105c) permettant la transmission d'un couple entre la bague externe (5d, 105d) et la bague interne (5a, 105a), et la bague externe (5d, 105d) et la bague interne (5a, 105a) pouvant être déplacées axialement l'une par rapport à l'autre entre une première position (A) et au moins une seconde position (A, B), et l'étendue axiale du joint homocinétique (5, 105) dans la première position (A) étant supérieure à son étendue dans la seconde position (B), et, entre la première partie de liaison (14, 114) et la seconde partie de liaison (15, 115) est monté au moins un ressort de pression (4, 104) permettant de précontraindre les deux parties de liaison (14, 114, 15, 115) l'une contre l'autre partie de liaison en direction d'une plus grande étendue axiale,
**caractérisé en ce que**
la première position (A) qui forme une position de fin de course est définie par une plaque d'arrêt annulaire (6, 106) pour la cage (5b, 105b) et/ou pour la bague interne (5a, 105a), reliée rigidement à la bague externe (5d, 105d), cette plaque d'arrêt (6, 106) étant montée perpendiculairement à l'axe de rotation (5d', 105d') de la bague externe (5d, 105d) dans la zone de la face frontale de la bague externe (5d, 105d) tournée vers la seconde partie de liaison (15, 115), et, dans la première position (A) la bague interne (5a, 105a) et/ou la cage (5b, 105b) étant comprimée(s) par le ressort de pression (4, 104) contre la plaque d'arrêt (6, 106), tandis que, dans la seconde position (B) la bague interne (5a, 105a) et/ou la cage (5b, 105b) est(sont) libérée(s) de la plaque d'arrêt (6, 106), et
la première position (A) forme une position de verrouillage du joint homocinétique (5, 105) interdisant des désaxages de la première et la seconde partie de liaison (14, 114 ; 15, 115), tandis que la seconde position (B) forme une position de libération permettant des désaxages.

2. Liaison d'arbre (10, 110) conforme à la revendication 1,
**caractérisé en ce que**
le diamètre interne (d) de la plaque d'arrêt (6, 106) est supérieur au diamètre interne (dᵢ) de la bague interne (5a, 105a) et est inférieur au diamètre externe (dₖ) de la cage (5d, 105d), et est de préférence inférieur au diamètre externe (dₐ) de la bague interne (5a, 105a).

3. Liaison d'arbre (110) conforme à la revendication 1 ou 2,
**caractérisé en ce qu'**
au moins la première partie de liaison (114) comporte une bride d'arbre (123) reliée à la bague externe (105d) pour permettre la liaison d'un élément de la ligne d'entrainement.

4. Liaison d'arbre (10, 110) conforme à l'une des revendications 1 à 3, **caractérisé en ce qu'**
au moins une première partie de liaison (14) comporte une première partie de liaison par la forme (2) reliée à la bague externe (5d), qui peut être reliée solidairement en rotation par une seconde partie de liaison par la forme (3) avec un élément de la ligne d'entrainement, les deux parties de liaison par la forme (2, 3) formant de préférence un accouplement à dents (11).

5. Liaison d'arbre (10, 110) conforme à l'une des revendications 1 à 4, **caractérisé en ce qu'**
au moins une seconde partie de liaison (15, 115) comporte un tourillon d'arbre (8, 108) relié rigidement à la bague interne (5a, 105a) du joint homocinétique (5, 105).

6. Liaison d'arbre (110) conforme à l'une des revendications 1 à 5, **caractérisé en ce qu'**
elle comporte un premier et un second joint homocinétique (5, 105), ces deux joints homocinétiques (5, 105) étant montés aux différentes extrémités (121, 122) d'un arbre d'entrainement (120), les deux parties de liaison (15, 115) étant formées par l'arbre d'entrainement (120) ou étant reliées rigidement à cet arbre.

7. Liaison d'arbre (110) conforme à la revendication 6,
**caractérisé en ce que**
la première partie de liaison (14) du premier joint homocinétique (5) constitue la première partie de liaison par la forme (2) tandis que la première partie de liaison (114) du second joint homocinétique (105) constitue la bride d'arbre (123).

8. Liaison d'arbre (10, 110) conforme à l'une des revendications 4 à 7, **caractérisé en ce qu'**
au moins la première partie de liaison (14), de préférence la seconde partie de liaison par la forme (3) de la première partie de liaison (14) est reliée solidairement en rotation à un disque adaptateur (1), la masse formant volant de ce disque adaptateur (1) pouvant de préférence être modifiée.

9. Liaison d'arbre (10, 110) conforme à l'une des revendications 4 à 8, **caractérisé en ce qu'**
une denture externe (2a) de la première partie de liaison par la forme (2) et/ou une denture interne (3a) de la seconde partie de liaison par la forme (3) est(sont) taillée(s) en pointes sur les faces frontales (2b, 3b) tournées l'une vers l'autre à l'état découplé.

10. Liaison d'arbre (10, 110) conforme à la revendication 9,
**caractérisé en ce que**
la denture interne (3a) se raccorde dans la zone des extrémités pointues des dents (3a') à une bague de centrage (3c) dont le diamètre interne correspond au moins au diamètre de la denture interne (3a).

11. Liaison d'arbre (10, 110) conforme à la revendication 10, **caractérisé en ce que**
la denture externe (2b) se raccorde dans la zone d'une extrémité située à l'opposé des extrémités pointues des dents (2a') à une collerette de centrage (2c) dont le diamètre correspond au diamètre interne de la bague de centrage (3c).
